# EUROPEAN PATENT APPLICATION

(11) **EP 1 528 264 A1**
(43) Date of publication of application: **04.05.2005**
(21) Application number: 03425701.4
(22) Date of filing: 30.10.2003
(51) Int. Cl.: F15B 13/01, F16K 31/122, F16K 31/163

(54) **Valve with an accumulator for damping the fluctuation of the pilot pressure**

(71) Applicant: OIL CONTROL S.p.A., 20122 Milano (IT)
(72) Inventor: Storci, Andrea, 41015 Nonantola (Modena) (IT)
(74) Representative: Gotra, Stefano

(57) **Abstract**

The device is applied to valves (1) in which in which a pilot pressure is transmitted, through a pilot conduit (2) provided with a first choke (3), to a pilot chamber (4) and acts on an active surface of a pilot piston (5) which mechanically acts on the obturator (6) of the valve (1); a calibrated spring (7) also operates in an opposite direction on the valve (1). The device also comprises a hydraulic accumulator (8) connected to a pilot conduit (2) at a point between the first choke (3) and the active surface of the pilot piston (4).

## Description

Reference is made in particular to valves of a type which is rather common, for example for actuating hydraulic cylinders use for movement of loads, wherein the obturator is piloted to open by a positive fluid pressure contrasted by a calibrated spring. In these valves, arranged on the return conduit of the fluid, the pressure of the fluid in the delivery conduit is transmitted, through a pilot conduit provided with a choke, to a pilot chamber and acts on the active surface of a pilot piston which then acts mechanically on the obturator of the valve; a calibrated spring acts in an opposite direction on the valve obturator. In some valves other pressures are applied, both for opening and closing the obturator. The valve opens, allowing a fluid return flow, when the fluid pressure exerts a force on the pilot piston which overcomes the thrust of the spring, as well as the resultant of any other forces due to pressures acting on the obturator. During the following description reference will be made, for reasons of simplicity, to valves in which only the pilot pressure and the spring act; although what will be described also applies, taking into consideration the due differences, to valves on which the resultant of forces due to hydraulic fluids acting on the obturator also act.

It sometimes happens that the fluid delivery pressure, for many and varied reasons, is subject to undesired fluctuations (disturbances, in reality) which can cause a lowering of the pilot pressure to below a level that causes valve opening. In these cases there is an undesired closure of the valve with a consequent blocking of the actuator activated thereby. This leads to an unstable functioning of the valve itself which causes for example in the case of movement of loads, to a stop-start operation, with the load repeatedly stopping and moving again.

A system used for limiting this drawback is insertion, in the pilot conduit, of a choke with a very small passage hole (even as small as a few tenths of a millimetre). With the inclusion of the choke, where these disturbances occur (sudden changes in pressure) on the delivery line, the pilot chamber depressurises after a delay of a certain time, and softens the instability effects which the disturbances cause on the valve operation.

This solution, apart from having a stabilising effect which is not controllable, exhibits a considerable drawback, namely that very narrow chokes cause a drop in pressure at their ends; this pressure varies considerably according to the viscosity of the fluid passing through; in cold weather, in which fluid viscosity increases significantly, this can lead to an undesired delay in valve functioning.

The main aim of the invention is to eliminate the above-described drawbacks by providing a stabiliser device for hydraulically-piloted valve openings, which does not suffer any consequence from changes in viscosity of the fluid piloting the valve, and which eliminates the negative effects caused by any undesired fluctuations in the delivery pressure of the pilot fluid.

An advantage of the invention is that enables easy regulation of the range of operation of the device.

These aims and advantages and others besides are all attained by the present invention, as it is characterised in the claims that follow.

Further characteristics and advantages of the present invention will better emerge from the detailed description that follows of a preferred but non-exclusive embodiment of the invention, illustrated purely by way of a non-limiting example in the accompanying figures of the drawings, in which:
figure 1 shows, in section, a possible constructional embodiment of the device, combined with a valve of known type and with the accumulator in a non-active position;
figure 2 shows, in section, an embodiment of the device of figure 1 with the accumulator in an active position;
figures 3, 4 and 5 show possible hydraulic diagrams of the device of the invention applied to a known-type valve.

With reference to the figures of the drawings, 1 denotes a load-lowering control valve, of known type, arranged on a return conduit C2 V2 of a fluid; the valve 1 is provided with an obturator 6 which is piloted to open by a positive fluid pressure circulating in a delivery conduit V1 C1 of fluid, and is contrasted, again during opening, by a calibrated spring 7. For piloting the valve, the pressure of the fluid in the delivery conduit is transmitted, through a pilot conduit 2 having a first choke 3, to a pilot chamber 4; the fluid pressure acts on the active surface of a small pilot piston 5 which then acts mechanically on the obturator 6 of the valve. In the illustrated embodiment the pilot piston is made in a single piece with the obturator of the valve; this conformation, however, is not necessary.

The choke 3 has a passage which is not significantly subject to any changes in viscosity in the fluid. Purely as a non-limiting example, the passage can have diameters of between 0.5 and 1.5 mm or larger should the pilot piston diameter be significantly larger.

The valve opens, enabling fluid return flow, when the pressure of the fluid exerts on the pilot piston a force which overcomes the spring thrust. The type of valve described is normally used for example to control a lowering of a load.

Up to this point the description is part of the prior art and is therefore usual.

The device of the invention is applied to the above-described valve and comprises a hydraulic accumulator 8 which is directly connected to the pilot conduit 2 at a point comprised between the first choke 3 and an active surface of the pilot piston 5; in other words, the accumulator 8 is directly connected with the pilot chamber 4.

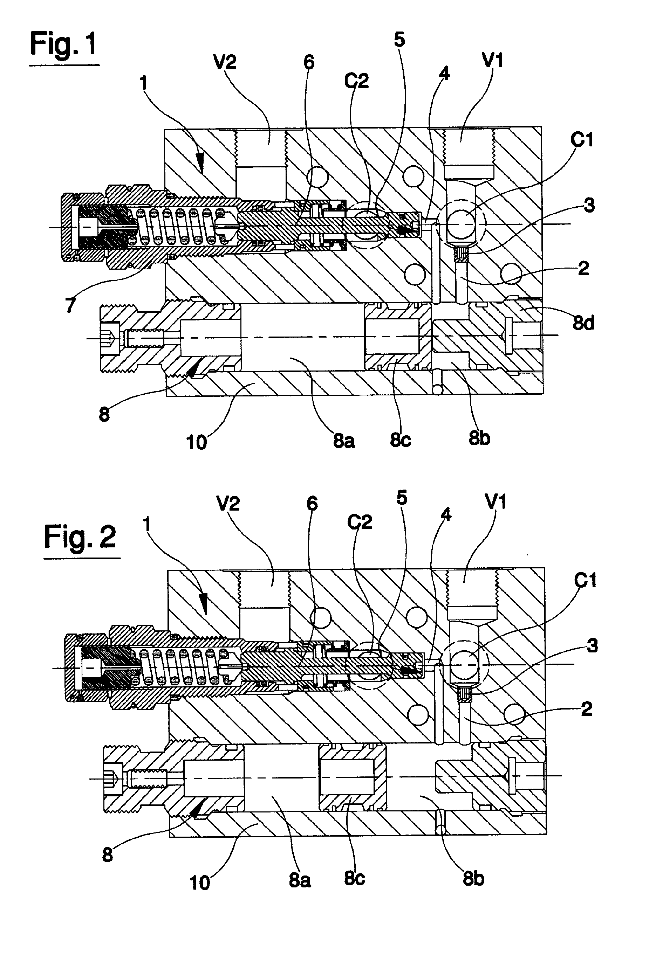

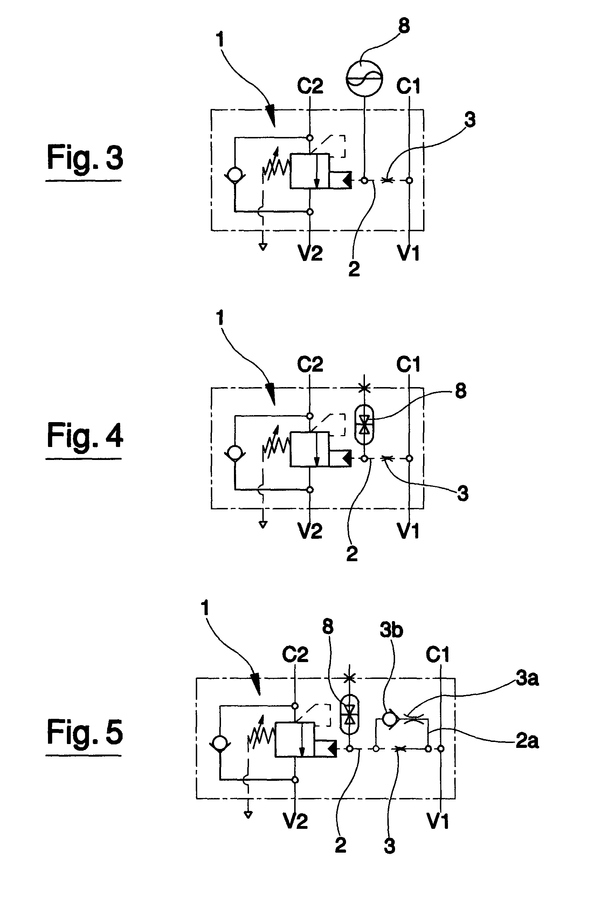

The hydraulic accumulator 8 is advantageously inserted into a metal block 10, in which the valve 1 is also inserted; in the illustrated embodiment of figures 1 and 2, the valve is a cartridge valve of known type. The hydraulic accumulator 8 is also a cartridge type and comprises a variable-volume closed chamber 8a containing a pressurised compressible fluid, for example nitrogen or another suitable gas. The accumulator 8 further comprises an accumulation chamber 8b, sealedly separated from the variable-volume chamber 8a by a slider 8c; the accumulation chamber 8b accumulates the fluid under pressure, as will be better described herein below. Obviously a different type of accumulator from the cartridge type inserted into a block 10 (as shown in figures 1 and 2) can be used, and can be arranged, as illustrated in the diagram of figure 3, as an external element of the hydraulic component comprising the valve 1.

In a further embodiment, illustrated in the diagram of figure 5, the device comprises a second pilot conduit 2a which is arranged in parallel with the first choke 3; a second choke 3a and a check valve 3b are arranged in series with each other on the pilot conduit 2a. The check valve 3b allows free passage of the fluid towards the pilot chamber 4, and therefore towards the accumulator 8 directly connected thereto. For reasons that will better emerge herein below, the second choke 3a has a passage hole which is greater than the hole of the first choke 3.

The operation of the device of the invention will now be described.

The situation illustrated in figure 1, which represents the device schematically represented in figure 4, shows the valve 1 in a closed position, determined by the thrust of the spring 7, which prevents flow of fluid through the return conduit C2 V2; in the delivery conduit V1 C1 there is no pressure and the hydraulic accumulator 8 exhibits the closed chamber 8a in its maximum expansion determined by the pressure of the compressible fluid contained therein. The pressure is not contrasted by any hydraulic fluid pressure in the circuit. In these conditions the pressure of the compressible fluid in the variable-volume chamber 8a, whatever that pressure might be, has no effect on the accumulation chamber 8b inasmuch as the slider 8c strikes against a closure cap 8d of the accumulator.

When the operator desires to open the valve 1, a manual command starts supply of hydraulic fluid to the delivery conduit V1 C1 and the fluid pressure is transmitted, through the first choke 3 and with a flow rate determined by the size of the hole in the choke, to the accumulation chamber 8b and to the pilot chamber 4 which, as mentioned above, are in direct reciprocal communication. The accumulation chamber 8b begins accumulating pressurised fluid as the compressible fluid contained in the variable-volume chamber 8a begins to compress due to the displacement of the slider 8c subjected to the fluid delivery pressure. When the fluid pressure in the chambers 4 and 8b overcomes the thrust exerted on the obturator 6 by the spring 7, the valve starts opening; as the delivery pressure of the fluid increases, so does the valve degree of opening and so do the pressure and quantity of the fluid contained in the chamber 8b of the accumulator.

If the operator wishes to close the valve, a further manual command will reduce the pressure in the delivery conduit V1 C1; the pressure on the pilot piston diminishes with a certain delay as it is "sustained" by the fluid pressure internally of the accumulator, which discharges through the choke 3.

For a same valve, i.e. given equal spring calibration and a same surface of the pilot piston 5, and for a same pilot pressure, the response time of the device depends, during opening, only on the choke 3 passage hole, which is kept quite wide so as not to be excessively affected by variations in viscosity of the hydraulic fluid; during closing, the device response time depends, apart from on the choke hole 3, also on the initial compressible fluid pressure present in the chamber 8a and the geometry (in practice, the diameter) of the chamber 8b; in other words the response time of the device depends, fundamentally, on the quantity of fluid which can be held in the accumulator and on the pressure exerted on the accumulator by the same compressible fluid therein.

It is therefore possible, by using suitable initial fluid pressure levels in connection with the diameter of the accumulation chamber of the accumulator, to cause the device to respond in normal response times to an operator's command. The command is always in the order of a few tenths of a second, after which closure of the valve is required, and is not in any practical way affected by the presence of the stabiliser device.

In the case of a disturbance in the pressure inside the supply conduit, which disturbances rarely exceed a tenth of a second in duration, the hydraulic fluid inside the accumulator maintains, for the duration of the disturbance, the pilot pressure at levels which prevent an undesired closure of the valve, which would happen in the absence of the stabiliser device of the object.

By way of example, with a pilot piston diameter and a spring 7 calibration enabling an initial opening of the valve with a pressure of about 50 bar, excellent pilot pressure stabilisation results have been obtained using accumulators with accumulation chamber diameter of about 30 mm and with initial compressible fluid pressures internally of the accumulator of about 30 bar.

The operation of a device such as the one illustrated in figure 3, in which the only difference is that the accumulator 8 is external of the hydraulic component comprising the valve 1, is entirely similar to the operation of the device as described herein above.

The operation of a device such as the one described in figure 5 is slightly different: during the delivery stage, the pilot fluid passes through the second choke 3a and the check valve 3b arranged on the second pilot conduit 2a. As the second choke 3a has a passage hole which is greater that the passage of the first choke 3, during the delivery stage there is a slight shorter delay in the valve opening response. During the valve closure stage the fluid flow passes only through the choke 3 as the check valve 3b prevents passage of the fluid through the second pilot conduit 2a. During this stage the device operation is the same as what is described above. This type of circuit is especially useful in cases where extremely rapid and ready valve opening is required, while the advantages of stabilisation during valve closure are maintained.

## Claims

1. A stabiliser device for valves having hydraulically-piloted opening, of a type to be applied to a valve (1) in which a pilot pressure is transmitted, through a pilot conduit (2) provided with a first choke (3), to a pilot chamber (4) and acts on an active surface of a pilot piston (5) which mechanically acts on the obturator (6) of the valve (1); a calibrated spring (7) also operating in an opposite direction on the valve (1); **characterised in that** it comprises a hydraulic accumulator (8) connected to a pilot conduit (2) at a point which is comprised between the first choke (3) and the active surface of the pilot piston (4).

2. The device of claim 1, **characterised in that** the hydraulic accumulator (8) is inserted in a metal block (10) in which the valve (1) is inserted; the valve (1) being a cartridge of known type.

3. The device of claim 2, **characterised in that** the hydraulic accumulator (8) comprises a variable-volume closed chamber (8a) containing a pressurised compressible fluid.

4. The device of claim 1, **characterised in that** it comprises a second pilot conduit (2a), arranged in parallel to the first choke (3), on which second pilot conduit (2a) a second choke (3a) is arranged, having a passage hole which is greater than a passage of the first choke (3), and a check valve (3b) is also arranged for allowing free passage of the fluid towards the pilot chamber (4) and the accumulator (8).
